# EUROPEAN PATENT SPECIFICATION

(11) **EP 3 104 557 B1**
(45) Date of publication and mention of the grant of the patent: **21.08.2019**
(21) Application number: 15465518.7
(22) Date of filing: 08.06.2015
(51) Int. Cl.: H04L 12/40, G07C 5/02

(54) **DEVICE AND METHOD FOR TRANSMITTING VEHICLE POSITION DATA**
VORRICHTUNG UND VERFAHREN ZUR ÜBERTRAGUNG VON FAHRZEUGPOSITIONSDATEN
DISPOSITIF ET PROCÉDÉ POUR TRANSMETTRE DES DONNÉES DE POSITION D'UN VÉHICULE

(43) Date of publication of application: 14.12.2016
(73) Proprietor: Continental Automotive GmbH, 30165 Hannover (DE)
(72) Inventor: Popa, Razvan, 307285 Mosnita Noua (RO)

(56) References cited:
- EP-A1- 1 455 278
- WO-A1-2006/129999
- "IEEE Standard for Universal Power Adapter for Mobile Devices;IEEE Std 1823-2015", IEEE STANDARD, IEEE, PISCATAWAY, NJ, USA, 15 May 2015 (2015-05-15), pages 1-123, XP068094269, ISBN: 978-0-7381-9608-4

## Description

### Field of the invention

The invention relates to the field of automotive applications. In particular, the invention relates to a device for a vehicle, wherein the device is configured to be reversibly coupled to a data bus of a vehicle in order to transmit and receive data via the data bus, to a data transmission system for a vehicle and to a vehicle with such a data transmission system.

### Background

In automobiles, several components are interconnected via a bus system in order to exchange data between these components. Examples for such interconnected components may be sensors, actuators, and data processing devices. Data processing devices in general receive incoming data, process these data and transmit the result of the data processing either to other components via the bus system and/or transmit this result to external recipients.

A bus system can be a data bus or, generally, an element for interconnecting at least two communicating components which enables these components to transmit and receive data via the bus system, for example by using electromagnetic signaling like electrical and optical signals.

In the context of automobile, at least some of the data processing devices interconnected by using a bus system may be referred to as telematic devices. Telematic devices generally use information and communication technologies, particularly in the technical field of automotive and automobile. Telematic devices may be used in vehicle in order to provide the driver or the fleet management with information relating to the vehicle, like position, distance, driving direction, trip duration or shift duration of a driver of a truck, speed over time, etc.

Telematic devices may be described as electronic units installed on board a vehicle and connected to a vehicle data bus via an on board connector. Generally, such a telematic device may perform the following functions: receiving vehicle data that are transmitted on the data bus (usually, the data are broadcasted on the bus, which may be a CAN bus, controller area network); collecting various vehicle performance data like speed, travelled distance, or a diagnostic trouble code, DTC, and transferring the collected data to a fleet management system.

Such a telematic device may be a so called aftermarket component, i.e. it is optionally installed in a vehicle and connected to the bus system via a connector. This connection must be monitored in order to determine whether it is still appropriately established or disconnected. Such a monitoring process may require additional components. Document "IEEE Standard for Universal Power Adapter for Mobile Devices;IEEE Std 1823-2015", ISBN: 978-0-7381-9608-4, is a standard based on a current-mode implementation of the CAN bus 2.0 standard, and is applicable among others to mobile devices for use in a vehicle. It defines modalities for device disconnection detection based on voltage measurements at the bus.

### Summary of the invention

It may be seen as an object of the invention to reliably detect a connection failure condition of a telematic device which is connected to a vehicle data bus with reduced expenses and effort in an easy and simple manner.

This object is solved by the features of the independent claims. Further embodiments of the invention are described in the dependent claims and the following description.

According to an aspect of the invention, a device for a vehicle is provided. The device is configured to be reversibly coupled to a data bus of a vehicle in order to transmit and receive data via the data bus, wherein the device is configured to apply a current to the data bus, wherein the device is configured to measure a voltage drop at the data bus as a result of the applied current and wherein the device is configured to determine whether or not it is connected to the data bus based on the measured voltage drop.

The device described herein may particularly be a telematic device, for example a so-called aftermarket device, to be coupled to a data bus system of a vehicle in order to gather and process vehicle data and to transmit at least some of these gathered and processed vehicle data to a central vehicle monitoring station or fleet management system. This device enables to detect whether or not a connection to the data bus has been successfully established and it can be monitored if the connection is correctly upheld or maintained. In case the device is disconnected no current can be applied to the data bus and therefore, no voltage drop can be measured and it can thus be determined that the device is disconnected from the data bus. Therefore, intentional or accidental disconnection of the device from the vehicle data bus can be recognized and an alert signal (optical or acoustical, for example) can be output to the vehicle driver and/or it can be sent to the central vehicle monitoring station and/or it can be stored at the device.

Thus, the device enables a simple, easy and low-cost monitoring or verification of the connection status of the device to the data bus. Particularly, no other plausibility verification which requires additional sensors in the device is required and therefore, the cost and the complexity of the device are reduced.

When the vehicle engine is shut down, the vehicle data bus becomes idle since all the devices connected to the data bus are in a low power mode or in an off mode and do not transmit any data via the data bus. In order not to interpret the idle mode of the data bus erroneously as a connection failure (or vice versa), the device described herein applies a current to the data bus and measures a voltage drop. The voltage drop can only be measured if the connection is correctly established, and therefore, it can be distinguished between an idle mode of the data bus and an engine off status of the vehicle. If the vehicle connector of the device is unplugged or interrupted on the data bus lines data frames sent on the data bus cannot be received by the device anymore and this situation may be misinterpreted as engine off status. Therefore, it may be necessary that the telematic device is capable of distinguishing between these two conditions, which is achieved by the features of the device described herein.

It may be seen as one particular advantage of this device that no external components are required to detect connection failures and such a device can be dynamically connected to almost any data bus in almost any configuration and independently of other devices connected to the data bus. The device merely requires that a current can be applied to the data bus and that the resulting voltage drop can be measured.

According to an embodiment of the invention, the device comprises a first connection element which is configured to be mechanically and electrically connected to the data bus, wherein the device is configured to determine whether or not the first connection element is appropriately connected to the data bus.

The first connection element may be a vehicle diagnostic connector. An appropriate connection means that a connection between the device and the data bus is established such that data can be transmitted and received via this connection and in order to meet the specification of the data transmission protocol of the data bus and the device connected to the data bus. The first connection element may be connected to a second connection element which is part of or belongs to the data bus system; in other words, the second connection element is a counterpart of the first connection element.

The device comprises a current source, wherein the current source is configured to apply the current to the data bus via the first connection element.

The current may particularly be a current pulse of short duration, for example between a few µs and 1 ms, particularly between 200 µs and 1 ms.

The device comprises a switching unit which is configured to selectively connect the current source to the data bus.

The switching unit particularly closes an electric circuit such that the current source is connected through to the data bus, for example via the first connection element. This connection can be built up according to a predetermined time schedule or according to other trigger-events for carrying out this step. In such a configuration, the first connection element may fulfill a dual function, namely transmitting and receiving data and passing through the current for determining the status of the connection of the device to the data bus. These two functions may particularly be carried out subsequently, i.e. the latter function may be carried out when no data is transmitted and received. However, data transmission may be started during sending a current pulse. In such a case, the data transmission protocol may use existing failure correction mechanisms of the data bus protocol to deal with the additional current and voltage drop on the data bus which may superimpose the signal of the transmitted data.

The device comprises a voltage measurement unit, wherein the voltage measurement unit is configured to determine a voltage drop at the data bus as a result of the applied current.

The data bus may particularly be a two-core data bus having a first line and a second line, such that the voltage drop as a result of the applied current is a differential voltage between these two lines.

According to a further embodiment of the invention, the device is configured to measure an impedance of the data bus based on the voltage drop value and the current value.

If the regular impedance of the data bus is known and it is measured by the device, the quality of the signal connection can be determined. Particularly, if the measured impedance deviates from the actual value of the data bus' impedance, it may be concluded that the electrical connection between the device and the data bus is not appropriate and of sufficient quality.

According to a further embodiment of the invention, the device comprises a bus access controller, wherein the bus access controller is configured to provide access to the data bus.

The bus access controller is configured to receive incoming data and to output data to be sent to the data bus

According to a further embodiment of the invention, the bus access controller is a controller area network, CAN, controller.

According to a further embodiment of the invention, the device is configured to monitor incoming data from the data bus, wherein the device is configured to apply the current to the data bus if the past time since the last received data packet from the data bus is equal to or greater than a predetermined threshold value.

In other words, the device may continuously monitor the data bus. If no incoming packets are detected, this may have two possible reasons: the bus is idle, i.e. none of the devices connected to the data bus transmit data via the bus, or the device has been (intentionally or accidentally) disconnected from the data bus. The connection to the data bus is checked after the predetermined time is up, i.e. the past time since the last received data packet (data bus activity, in general) is equal to or greater than the threshold value, which indicates a number of seconds or minutes.

According to a further embodiment of the invention, the predetermined threshold value can be varied.

This enables to adapt the waiting period of the device until checking the connection status. For example, safety critical devices may have a shorter checking interval than devices non-critical to safety.

According to a further embodiment of the invention, the device is configured to monitor incoming data from the data bus, wherein the device is configured to periodically apply the current to the data bus after a predetermined time interval.

In this embodiment, the connection status is periodically checked, independent from the time and number of received data packets.

According to a further aspect of the invention, a data transmission system for a vehicle is provided. The data transmission system comprises a data bus and a device as described above and hereinafter, wherein the device is reversibly coupled to the data bus.

The interaction between the device and the data bus has been described above. Therefore, it is not repeated herein. However, it should be understood that the description relating to the device and the data bus of the vehicle above does similarly apply to the data transmission system.

According to a further aspect of the invention, a vehicle is provided, comprising a data transmission system as described above.

These and other aspects of the present invention will become apparent from and elucidated with reference to the exemplary embodiments described hereinafter.

Exemplary embodiments of the present invention will now be described in the following, with reference to the following drawings.

### Brief description of the drawings

- Fig. 1: shows a data transmission system with a device according to an exemplary embodiment of the invention;
- Fig. 2: shows a data transmission system with a device according to an exemplary embodiment of the invention;

### Detailed description of embodiments

The illustration in the accompanying drawings is schematically and not to scale. In different drawings, similar or identical elements or steps are provided with the same reference numerals.

The following detailed description is merely exemplary in nature and is not intended to limit the application and its use.

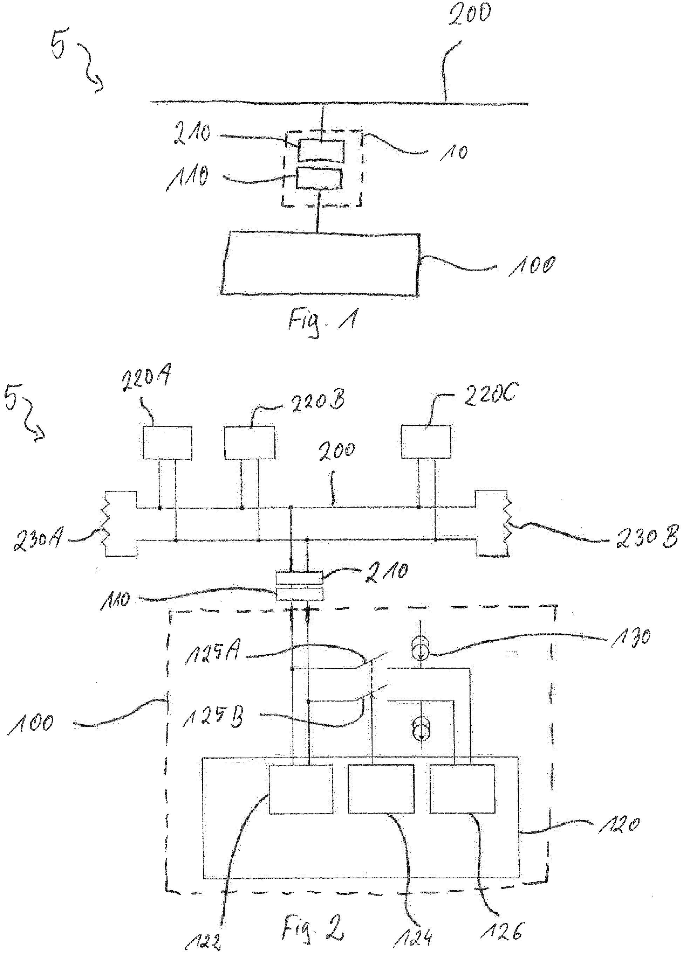

Fig. 1 illustrates a data transmission system 5 comprising a data bus 200 and a device 100 for a vehicle, which is configured to be reversibly coupled to the data bus 200. The device 100 is coupled to the data bus 200 via a connector comprising a first connection element 110 which is assigned to the device 100 and a second connection element 210 which is assigned to the data bus 200.

Fig. 2 illustrates the embodiment shown in Fig. 1 in more detail with regard to the data bus 200 and the device 100.

The data bus 200 is a two-line bus, for example a CAN bus. Several devices 100, 200A, 200B, 200C are connected to the data bus 200 in order to transmit and receive data sent via the data bus. The data bus 200 can be drawn up as comprising two termination resistors 230A, 230B, each of which has a value of for example 120 Ohms. The device 100 is a aftermarket telematic device which is reversibly coupled to the data bus 200 with first and second connection elements 110, 210. The devices 200A, 200B and 200C may be engine control units (or other functional units of a vehicle).

The device 100 comprises a processing unit 120 with a bus controller 122, a switching unit 124 and a measurement unit 126. The switching unit is connected to two switches 125A, 125B and is configured to bring these switches from a closed state to an open state and vice versa. If the switches 125A, 125B are closed, a current is applied to the lines of the data bus 200 by the current source 130. Since the measurement unit 126 is also connected to the switches (and thus to the lines of the data bus in case the switches are closed) it can measure the voltage drop over the data bus lines as a result of the applied current.

The switching unit 124 may be configured to carry out the switching operation of the switches 125A, 125B as described above, i.e. periodically or triggered by any other event. The bus controller 122 may determine an idle time of the data bus 200 and may cause the switching unit to close the switches 125A, 125B if the idle time is equal to or greater than a predetermined threshold value.

The impedance of the data bus 200 can be measured based on the applied current value and the measured voltage drop. This determined impedance value can then be compared to the actual value of the data bus impedance in order to determine if the connection 10 is in an appropriate condition.

In the idle time periods, the telematic device 100 measures the data bus impedance. When the device 100 detects that it has passed a long idle time period (this period can be defined as a time period greater than the normal data bus frame broadcast interval time) then it enables the data bus resistance measurement circuitry (current source + measurement unit) for a short period of time. A CAN bus, for example, has an equivalent impedance of 60 ohms in case of two parallel termination resistors of 120 ohm. When the data bus resistance circuitry measurement is enabled a measurement reference current would be injected via the equivalent data bus impedance, thus provoking a voltage drop between the data bus lines. The measurement unit measures the differential voltage drop between the data bus lines during the time period the measurement current is injected. The differential voltage that is measured is expected to be in a well defined range (bus impedance value multiplied by the injected current value), in case of no failure condition at the data bus connector lines. Any vehicle connector failure (like disconnected lines or shortened lines) would cause that the measured voltage to be out of an expected voltage range. The differential measured voltage in this case will be very close to zero volts. When the data bus is idle, activation of the impedance measurement circuitry does not cause any disturbance, because no data frames are broadcasted. While the resistance measurement function is enabled, data transmission activity on the data bus can start at any time and the data frames broadcasted during this time may be disturbed. Therefore, the period of time while the diagnostic measurement is enabled is kept very short, so that the vehicle data bus may recover automatically (for example by the standard data bus fault confinement, which exists in CAN) from any error condition that can be induced inadvertently on the vehicle data bus when the measurement is enabled.

## Claims

1. Device (100) for a vehicle, which is configured to be reversibly coupled to a data bus (200) of a vehicle in order to transmit and receive data via the data bus (200),
wherein the device (100) is configured to apply a current to the data bus (200);
wherein the device (100) is configured to measure a voltage drop at the data bus as a result of the applied current;
wherein the device (100) is configured to determine whether or not it is connected to the data bus based on the measured voltage drop; **characterized by**
the device (100) comprising a switching unit (124), two switches (125A, 125B), a voltage measurement unit (126), and a current source (130);
wherein the switching unit (124) is connected to the two switches (125A, 125B) and configured to carry out the switching operation of the two switches (125A, 125B);
wherein the switching unit (124) is configured to selectively connect the current source (130) to the data bus (200) ;
wherein the measurement unit (126) is connected to the switches;
wherein the current source (130) is configured to apply the current to the data bus (200) via a first connection element (110);
wherein the voltage measurement unit (126) is configured to determine a voltage drop at the data bus (200) as a result of the applied current.

2. Device (100) according to claim 1,
Wherein the first connection element (110) is configured to be mechanically and electrically connected to the data bus (200) ;
wherein the device (100) is configured to determine whether or not the first connection element (110) is appropriately connected to the data bus.

3. Device (100) according to any one of the preceding claims,
wherein the device is configured to measure an impedance of the data bus (200) based on the voltage drop value and the current value.

4. Device (100) according to any one of the preceding claims,
comprising a bus access controller (122);
wherein the bus access controller (122) is configured to provide access to the data bus (200).

5. Device (100) according to claim 4
wherein the bus access controller (122) is a controller area network, CAN, controller.

6. Device (100) according to any one of the preceding claims,
wherein the device is configured to monitor incoming data from the data bus (200);
wherein the device is configured to apply the current to the data bus if the past time since the last received data packet from the data bus is equal to or greater than a predetermined threshold value.

7. Device (100) according to claim 6,
wherein the predetermined threshold value can be varied.

8. Device (100) according to any one of the preceding claims,
wherein the device is configured to monitor incoming data from the data bus (200);
wherein the device is configured to periodically apply the current to the data bus after a predetermined time interval.

9. Data transmission system (5) for a vehicle, comprising:
a data bus (200); and
a device (100) according to any one of the preceding claims;
wherein the device (100) is reversibly coupled to the data bus (200).

10. Vehicle, comprising
a data transmission system according to claim 9.

## Patentansprüche

1. Vorrichtung (100) für ein Fahrzeug, die zum reversiblen Koppeln mit einem Datenbus (200) eines Fahrzeugs ausgelegt ist, um Daten über den Datenbus (200) zu übertragen und zu empfangen,
wobei die Vorrichtung (100) zum Anlegen eines Stroms an den Datenbus (200) ausgelegt ist;
wobei die Vorrichtung (100) zum Messen eines Spannungsabfalls an dem Datenbus als Ergebnis des angelegten Stroms ausgelegt ist;
wobei die Vorrichtung (100) zum Bestimmen ausgelegt ist, ob sie basierend auf dem gemessenen Spannungsabfall mit dem Datenbus verbunden ist oder nicht; **gekennzeichnet durch**
wobei die Vorrichtung (100) eine Schalteinheit (124), zwei Schalter (125A, 125B), eine Spannungsmesseinheit (126) und eine Stromquelle (130) umfasst;
wobei die Schalteinheit (124) mit den beiden Schaltern (125A, 125B) verbunden und zum Durchführen des Schaltvorgangs der beiden Schalter (125A, 125B) ausgelegt ist;
wobei die Schalteinheit (124) zum selektiven Verbinden der Stromquelle (130) mit dem Datenbus (200) ausgelegt ist;
wobei die Messeinheit (126) mit den Schaltern verbunden ist;
wobei die Stromquelle (130) zum Anlegen des Stroms an den Datenbus (200) über ein erstes Verbindungselement (110) ausgelegt ist;
wobei die Spannungsmesseinheit (126) zum Bestimmen eines Spannungsabfalls am Datenbus (200) als Ergebnis des angelegten Stroms ausgelegt ist.

2. Vorrichtung (100) nach Anspruch 1,
wobei das erste Verbindungselement (110) zum mechanischen und elektrischen Verbinden mit dem Datenbus (200) ausgelegt ist;
wobei die Vorrichtung (100) zum Bestimmen ausgelegt ist, ob das erste Verbindungselement (110) ordnungsgemäß mit dem Datenbus verbunden ist oder nicht.

3. Vorrichtung (100) nach einem der vorhergehenden Ansprüche,
wobei die Vorrichtung zum Messen einer Impedanz des Datenbusses (200) basierend auf dem Spannungsabfallwert und dem Stromwert ausgelegt ist.

4. Vorrichtung (100) nach einem der vorhergehenden Ansprüche,
umfassend eine Buszugriffssteuerung (122);
wobei die Buszugriffssteuerung (122) zum Vorsehen eines Zugriffs auf den Datenbus (200) ausgelegt ist.

5. Vorrichtung (100) nach Anspruch 4
wobei die Buszugriffssteuerung (122) eine CAN-Steuerung (CAN = "Controller Area Network") ist.

6. Vorrichtung (100) nach einem der vorhergehenden Ansprüche,
wobei die Vorrichtung zum Überwachen der vom Datenbus (200) eingehenden Daten ausgelegt ist;
wobei die Vorrichtung zum Anlegen des Stroms an den Datenbus ausgelegt ist, wenn die verstrichene Zeit seit dem letzten vom Datenbus empfangenen Datenpaket gleich oder größer als ein vorbestimmter Schwellenwert ist.

7. Vorrichtung (100) nach Anspruch 6,
wobei der vorgegebene Schwellenwert variiert werden kann.

8. Vorrichtung (100) nach einem der vorhergehenden Ansprüche,
wobei die Vorrichtung zum Überwachen der vom Datenbus (200) eingehenden Daten ausgelegt ist;
wobei die Vorrichtung zum periodischen Anlegen des Stroms an den Datenbus nach einem vorbestimmten Zeitintervall ausgelegt ist.

9. Datenübertragungssystem (5) für ein Fahrzeug, umfassend: einen Datenbus (200); und
Vorrichtung (100) nach einem der vorhergehenden Ansprüche;
wobei die Vorrichtung (100) reversibel mit dem Datenbus (200) gekoppelt ist.

10. Fahrzeug, umfassend
ein Datenübertragungssystem nach Anspruch 9.

## Revendications

1. Dispositif (100) pour un véhicule, qui est configuré pour être couplé de manière réversible à un bus de données (200) d'un véhicule afin de transmettre et de recevoir des données par le biais du bus de données (200),
le dispositif (100) étant configuré pour appliquer un courant au bus de données (200) ;
le dispositif (100) étant configuré pour mesurer une chute de tension au niveau du bus de données à la suite du courant appliqué ;
le dispositif (100) étant configuré pour déterminer s'il est raccordé, ou non, au bus de données en se basant sur la chute de tension mesurée ; **caractérisé en ce que**
le dispositif (100) comprend une unité de commutation (124), deux commutateurs (125A, 125B), une unité de mesure de tension (126) et une source de courant (130) ;
dans lequel l'unité de commutation (124) est raccordée aux deux commutateurs (125A, 125B) et configurée pour réaliser l'opération de commutation des deux commutateurs (125A, 125B) ;
dans lequel l'unité de commutation (124) est configurée pour raccorder de manière sélective la source de courant (130) au bus de données (200) ;
dans lequel l'unité de mesure (126) est raccordée aux commutateurs ;
dans lequel la source de courant (130) est configurée pour appliquer le courant au bus de données (200) par le biais d'un premier élément de raccordement (110) ;
dans lequel l'unité de mesure de tension (126) est configurée pour déterminer une chute de tension au niveau du bus de données (200) à la suite du courant appliqué.

2. Dispositif (100) selon la revendication 1,
dans lequel le premier élément de raccordement (110) est configuré pour être raccordé de manière mécanique et électrique au bus de données (200) ;
le dispositif (100) étant configuré pour déterminer si le premier élément de raccordement (110) est, ou non, raccordé de manière appropriée au bus de données.

3. Dispositif (100) selon l'une quelconque des revendications précédentes,
le dispositif étant configuré pour mesurer une impédance du bus de données (200) en se basant sur la valeur de chute de tension et la valeur de courant.

4. Dispositif (100) selon l'une quelconque des revendications précédentes,
comprenant un dispositif de commande d'accès au bus (122) ;
dans lequel le dispositif de commande d'accès au bus (122) est configuré pour fournir un accès au bus de données (200).

5. Dispositif (100) selon la revendication 4,
dans lequel le dispositif de commande d'accès au bus (122) est un dispositif de commande de multiplexage CAN (CAN) .

6. Dispositif (100) selon l'une quelconque des revendications précédentes,
le dispositif étant configuré pour surveiller des données entrantes en provenance du bus de données (200) ;
le dispositif étant configuré pour appliquer le courant au bus de données si le temps passé depuis le dernier paquet de données reçu en provenance du bus de données est égal ou supérieur à une valeur de seuil prédéterminée.

7. Dispositif (100) selon la revendication 6,
dans lequel la valeur de seuil prédéterminée peut être modifiée.

8. Dispositif (100) selon l'une quelconque des revendications précédentes,
le dispositif étant configuré pour surveiller des données entrantes en provenance du bus de données (200) ;
le dispositif étant configuré pour appliquer de manière périodique le courant au bus de données après un intervalle de temps prédéterminé.

9. Système de transmission de données (5) pour un véhicule, comprenant :
un bus de données (200) ; et
un dispositif (100) selon l'une quelconque des revendications précédentes ;
dans lequel le dispositif (100) est couplé de manière réversible au bus de données (200).

10. Véhicule comprenant
un système de transmission de données selon la revendication 9.
